# EUROPEAN PATENT APPLICATION

(11) **EP 2 774 679 A1**
(43) Date of publication of application: **10.09.2014**
(21) Application number: 12846749.5
(22) Date of filing: 29.10.2012
(51) Int. Cl.: B02B 5/02

(54) **DRY PROCESSING TECHNIQUE FOR CORN AND DEVICE THEREFOR**

(30) Priority: 31.10.2011 CN 201110337144
(71) Applicant: Wang, Hongfu, Zhengzhou, Henan 450000 (CN)
(72) Inventor: WANG, Hongfu, Zhengzhou Henan 450000 (CN); WANG, Yi, Zhengzhou Henan 450000 (CN)
(74) Representative: Carpmaels & Ransford LLP
(86) International application number: PCT/CN2012/083672
(87) International publication number: WO 2013/064046

(57) **Abstract**

The present invention disclosed a dry processing technique for corn which mainly comprising stages of cleaning, conditioning, debranning, degerming and grits breaking, and germ screening and grits extracting. The debranning stage comprises first stirred debranning, dampening and second stirred debranning in sequence. The dampening stage uses a dampener (9) to add water of 0.5-5% of the corn weight to the corn, the water temperature is 10-60 °C, and the stirred debranning stage is performed within 10 minutes after dampening. The height of the corn is controlled within 0.5-3m during the stirred debranning stage. Stirrers (8, 1, 12, 15) are employed, and the linear velocity of the stirring rod is controlled within 1-6 m/S. The process can increase the output rates of the corn grits and corn flour with a fat content less than 1%, and the germ with a purity of more than 80%.

## Description

### Field of the Invention

The present invention is related to a dry processing using stirred debranning and grinded degerming, which is suited for the product line producing corn grits, corn flour, corn germ and corn bran by grinding corn.

### Description of the Prior art

There are two processing methods for corn: dry and wet processing methods. The so-called wet processing is a method in which the corn is soaked in water for over dozens of hours and then is grinded to produce starch and starch sugar. By strict classification, except the above wet processing, all the other processing methods belong to the dry processing field including a processing method which only has one step of grinding process for the corn used for fodder. But nowadays the dry processing as is commonly described (including the so-called semi-wet process with a small amount of wetting water) is the process method in which the corn grits and corn flour is specifically provided for human consumption, food industry and brewing industry. As recorded by authority material, the corn produced by generalized dry processing might be accounting for 80% of the world's total output, and the corn produced by narrow-sensed dry processing also could be over 20% of the world's total output. Obviously, dry processing is the main corn process method.

The current corn processing technique flow mainly comprises five stages: corn cleaning, moisture conditioning, debranning, degerming and grits breaking, and germ screening and grits extracting. Corn kernel is made of four parts which are endosperm, germ, bran layer and calyptra. What the people directly consumes are the broken kernels of endosperm called as corn grits and corn flour. The major ingredient of an endosperm is starch, where the average fat content is 0.8%. Corn germ has an average 40% of fat content, 18% of protein content, the content of sugar, minerals and vitamin also being abundant. As germ mixing into corn grits and corn flour will affect taste and be disadvantageous for brewing industry etc., the fat content being not more than 1% is an important quality index for corn grits and corn flour. Also as the endosperm in which the major ingredient is starch mixing into germ will severely affect oil yield, the purity of the germ is defined not less than 80%. The major ingredient of corn bran and calyptra is cellulose which can be only used as low-value fodder or industrial raw material. The finished products of a corn process include corn grits, corn flour, corn germ and corn bran (the calyptra is mixed in the corn bran due to similar density). The corn grits and corn flour therein are the main products of the product line, and corn germ and corn bran are the by-products. As the quality of corn grits and corn flour is determined by the purity of the corn endosperm therein, and corn germ has abundant fat and protein that both have high nutrient and economical value, highly processed corn germ having huge economical and social benefits, so, by separating the endosperm from bran and germ (hereinafter referred to as debranning and degerming), and extracting the maximum amount of pure endosperm and germ is the key index of a corn processing.

The debranning stage of current dry processing for corn uses a debranner which has similar structure and operating principle with a rice husking machine to grind off part of the corn bran. As the corn bran layer has high strength, poor water absorption, and firmly bonding with endosperm, plus the ladder-type flat corn kernels are hard to rotate in the narrow space between roller and screen drum. Thus, whilst the broken rate of each debranning stage of current is about 10%, and the debranning rate is only about 30%. The undebranned corns and broken corn kernels are sent to the following stages to be processed by the equipment mainly using impacting, which will inevitably produce a large amount of mixed and integrated kernels that are made of two components of bran, germ and endosperm or all of them. As the density and suspension speed of the endosperm kernels adhered with a few amount of bran layer and germ and the pure endosperm kernels with the same granularity, and the germ kernels adhered with a few amount of bran layer and endosperm and the pure germ kernels with the same granularity are all similar, and hard to separate, the finished product rate of the high standard products in dry processing for corn industry is very low in China and even worldwide nowadays (average only 30% for the corn grits and corn flour that the fat content is less than 1% in China as recorded, at most 45% in developed country, and the average content of the endosperm is 83% in which the average fat content is 0.8% in corn kernels). The low debranning rate and the large amount of broken kernels produced during the debranning stage are the reasons for the above disadvantage. China and many other countries in the world use the whole corn kernels for grinding for fodder because of the inefficiency of debranning and degerming technology, the wasted high-class edible oil and high-class vegetable protein for human consuming can be millions or tens of millions tons each year, also the harm brought by these millions or tens of millions tons of fat being used as fodder for the breeding industry cannot be neglected.

### Summary of the Invention

According to the preceding situation, it is the objective of the present invention to provide a dry processing and equipment for corn that using stirred debranning and grinded degerming, it is suited for the product line producing corn grits, corn flour, corn germ and corn bran by grinding corn.

In order to achieve the preceding objective, the present invention uses the following technical scheme:
A dry processing for corn mainly comprises cleaning, conditioning, debranning, degerming and grits breaking, and germ screening and grits extracting stages, wherein the debranning stage mainly includes first stirred debranning, dampening and second stirred debranning in sequence. The cleaning stage may include stages of magnetic separation, screening and destoning, etc.

Specifically, the second stirred debranning can be repeated one to four times according to the practical situation of the product line, whilst repeating the stirred debranning, the debranned bran layers are removed by air separation or screening after each stirred debranning.

Further, the dampening stage uses the dampener to add water of 0.5-5% of corn weight to the corn, the water temperature being 10-60°C (preferred 20-60°C), the corn is sent to stirred debranning stage for processing within 10 minutes after dampening. The height of the corn is controlled within 0.5-3m during the stirred debranning. A stirrer can be used during stirred debranning, with the linear velocity of the stirring rod of the stirrer being controlled within 1-6 m/S.

Preferably, a stirrer can be used for stirred debranning for corn again in the germ separating and grits breaking stage.

An equipment for achieving the dry processing technique for corn, which includes a magnetic selector, a vibrating screen, a vertical suction duct, a destoner, a raw corn warehouse, a moisture conditioner, a corn dampening warehouse, a first stirrer, a dampener, a second stirrer, an suction winnower, a teeth-roller grinder, a cylinder grading screen and a plansifter; in which one outlet of the cylinder grading screen connects the forth stirrer, the forth stirrer connects the plansifter; the upper outlet of the vertical suction duct connects the first wind net device; the upper outlet of the suction winnower connects the second wind net device, the first and second wind net device are made of a fan, a centrifugal dust collector and an wind closing unit.

Specifically, one to four of the second stirrer and the suction winnower can be added according to practical situation of the product line.

The germ separating and grits breaking stage is made of stages of a grinding (teeth-roller grinder), a screening (cylinder grading screen) and a stirred debranning (the forth stirrer). The germ screening and grits extracting stage can be made of stages of a screening and a gravity separation. At least a grinding stage, a screening and a gravity separation stage can be added to make up a grinding collection stage if necessary.

The present inventive technique uses common methods to condition the corn quality first. Such as adding 1∼5% room temperature water to the corn whilst using steam to treat the corn (can be achieved using moisture conditioner), then the corn are transferred to the corn dampening warehouse to store and soak for 6∼24 hours. This can assure the corn bran soak with the water sufficiently to become soft, also the corn germ soaking with the water sufficiently to improve the toughness. The debranning treating for the corn is performed after the conditioning treating.

The dampening stage of the present inventive can use a spray dampener. The objective of the dampening is to make the water content go into the space between the corn bran layer and endosperm through the broken places of the outer bran, thus separating the corn outer bran and the endosperm. The dampening needs to pay attention to the water temperature, the amount the added water and the soak time etc. The water temperature of the dampening is controlled between 10∼60°C. Generally by using room temperature water can achieve the technical effect, and slightly increasing the water temperature can make the water permeate into the corn epidermis more quickly, facilitating the outer bran separation. If the temperature is too high (over 60 degree), it can damage and cure the protein in the corn, destroy the quality of the corn, as well as over consume energy, in which the loss is more than the gain. The amount of the dampening water is controlled within 0.5-5% times of the weight of the corn, as the objective of dampening is to wet the epidermis, while too much dampening cannot result in better effect, and wastes the water resource. It is better to send the corn to the stirred debranning stage for processing within 10 minutes after the dampening. As the epidermis will separate within a short time after the dampening, also the endosperm will soak with the water after a long time, making the epidermis stick to the corn again, and being inefficient for the debranning. The dampening stage can use liquid water to spray to the corn, or use steam to treat the corn.

Each stirred debranning stage of the debranning stage can control the stirring strength and debranning effect by adjusting the linear velocity of the stirring rod of the stirrer and the material height in the container, assuring each stirred debranning stage can peel off most of the corn bran layer on the premise that not to produce broken corn kernels, and making the whole effect of the debranning stage to achieve the objective that 70% of the corn bran layer can be debranned.

The stirred debranning stage of the present inventive uses the stirrer (detailed in Patent CN200910157760.2). When the stirrer (can be also called debranning stirrer) is working, it relies on the sharp scraper on the cutting edge to remove the corn bran layer. The principle of the stirred debranning is: to keep the material on a certain height, the lower material layer bears the pressure from the upper material layer to generate a holding force which generates a relative force with the stirring force of the stirring rod, scraping or rubbing the corn epidermis to destroy it, thus peeling off the corn outer bran. During the stirring, among the material per se, there is a friction effect which can also rub off part of the corn outer bran. During the stirring, the parameters of the stirring depth of the material, the shape and texture of the stirring rod, stirring time and the velocity of the stirring rod etc. should be paid attention to. The material height of the corn is preferably controlled within 0.5-3 meters during the stirred debranning. If the material height of the corn is too low, the holding force is not enough to achieve a better debranning effect; if the material height of the corn is too high, which can increase the energy consumption of the stirred debranning, and break the corn due to the over applying force to produce the side effect. The stirring rod can be in form of an insetting blade in the rod, scraping off the corn outer bran, or using polyester rod or grinding wheel to polish the corn. The stirring time and the velocity of the stirring rod can be adjusted to achieve high debranning rate of the corn epidermis and low corn broken rate according to different corn properties, in order to achieve a better debranning effect. A dampening stage can be added before the whole stirred debranning stage, of which the objective is to increase the strength of the corn bran, thus to scrape off the corn epidermis more efficiently during the first stirred debranning stage. The whole or part of the stirred debranning stage can be repeated to increase the debranning rate, achieving better technical effect. Two to four stirred debranning stages are configured in the present invention. In the practical operation, as long as the stirring does not produce broken corn kernels, the stirring strength of the stirrer can be adjusted to a relative high level in each stage, in order to assure that the whole effect of the stirred debranning stage achieves debranning 70% of the corn bran layer (scraper shall not touch the bran at the top of corn kernels and the pit of the corn germ, thus the whole kernel is hard to debran completely), in the meantime the broken rate of the corn kernels should be controlled within 3%.

The whole kernels of corn are crushed by a teeth-roller grinder during the degerming and grits breaking stage in the present invention. As the thickness of the corn germ is only one third of the thickness of the corn kernel, the corn germ has plenty of fat, extensibility and is hard to break, the corn germ soaks water rapidly, and the bond between which and the endosperm and bran layer decreases. Thus, when using the teeth-roller grinder to grind, it's easy not to hurt the corn germ whilst grinding the corn kernels when the rolling gap is adjusted to be about 2 mm. The fine material within 1 mm after grinding are sent to the cylinder grading screen for germ screening and grits extracting, and the big kernels are sent to the third stirrer for stirred debranning again. Herein the stirred debranning stage is configured to use the scraper of the stirring rod equipped with scraper to scrape off the bran layer and small endosperm on the big endosperm, and also the bran and small endosperm on the big germ, in order to increase as more of the pure big endosperm and germ as possible.

The first screening stage of the germ screening and grits extracting stage in the present invention uses plansifter to classify the material which were sent from the debranning and grits breaking stage into several grades, the second screening stage uses gravity separator and flour-cleaning machine to further classify the material which were screened from the first screening stage in terms of the differences of density and suspension speed. The heavy material screened from gravity separator and flour-cleaning machine are finished product of corn grits, the light material are germ, and the material between them are the mixtures of endosperm, germ and bran layer which fall below the standard (called mixed material for short in the following text). The mixed material which has relatively bad quality can be used as fodder directly. Modem product line is generally added a grinding screening stage which is made of at least one grinding stage and one screening stage, after screening out a small amount of pure germ and endosperm, the rest mixed material is used for fodder.

In contrast with current technology, the present has the following beneficial effects:
(1) The present inventive technique peels off over 70% of the bran layer on the premise of keeping the corn kernels substantially unbroken. The debranned bran layer has a sheet shape, and is easy to be separated. The undebranned bran layer is also already stripped from endosperm (the sheet shape bran layer part of which is adhered on the endosperm, another part is already debranned from endosperm), and is easy to be separated in the following stages. Debranning off at least 70% of the corn bran layers, and separating them as sheet shape means this has solved the technical problem of the corn debranning which has been boring the global corn processing industry for thousands of years, which is going to be a qualitative improvement in the dry processing field for corn. The breakthrough of the problem of the corn debranning and degerming can produce millions of tons of the high-class edible oil and vegetable protein resources only in China each year (could be tens of millions of tons worldwide), apparently the economical and social benefits are both enormous.
(2) The present invention uses degerming and grits breaking stage to make the output rate of the corn grits and corn flour with less than 1% fat content up to over 60% (30-40% for current technique), and the output rate of the germ with more than 80% purity can be increased to more than 10% (only 7% for current technique). Therefore, the whole economical production benefit can be remarkably improved.
(3) The stirred debranning stage in the present invention can remove the impurities of dust etc. adhered on the corn bran layer while using the moisture conditioner to wet the corn, decreasing the sand content of the finished corn products on the product line, so that the cleanliness and edible quality are largely improved.

### Brief Description of the Drawings

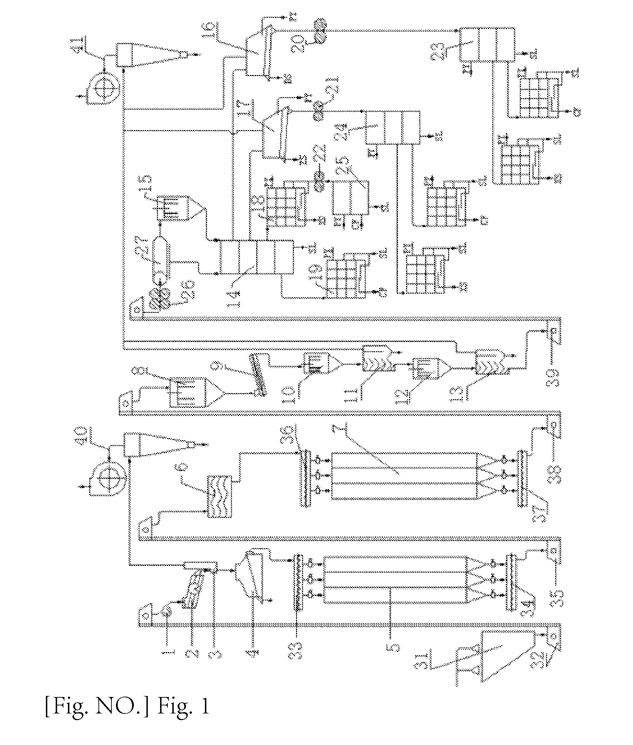

Figure 1 is the flow diagram of the dry processing for corn according to the present invention.

### Detailed Description of the Preferred Embodiments

The technical scheme of the present invention is further described below with preferred embodiments, and the protection scope of the present invention is not intended to be limited thereto.

### Embodiment 1

A dry processing for corn, wherein the main flow is: magnetic separation → screening → destoning → entering a raw corn warehouse → conditioning → corn dampening →first stirred debranning → dampening →second stirred debranning →first winnowing →third stirred debranning →second winnowing → degerming and grits breaking → germ screening and grits extracting.

An equipment to fulfill the dry processing for corn (see Figure 1), the equipment includes a magnetic screen 1, a vibrating screen 2, a vertical suction duct 3, a destoner 4 (the destoner 4 connects to the raw corn warehouse 5 through the first helical conveyor 33), a raw corn warehouse 5 (the raw corn warehouse 5 connects to the moisture conditioner 6 through the second helical conveyor 34 and the second hoister 35), a moisture conditioner 6 (the moisture conditioner 6 connects to the corn dampening warehouse 7 through the third helical conveyor 36), a corn dampening warehouse 7 (the corn dampening warehouse 7 connects to the first stirrer 8 through the forth helical conveyor 37 and the third hoister 38), a first stirring debranner 8, a spray dampener 9, a second stirring debranner 10, a first suction winnower 11, a third stirring debranner 12, a second suction winnower 13 (the second suction winnower 13 connects to the teeth-roller grinder 26 through the forth hoister 39), a teeth-roller grinder 26, a cylinder grading screen 27 and a plansifter 14 that connected in sequence; wherein one outlet of the cylinder grading screen 27 connects the forth stirring debranner 15; the upper outlet of the vertical suction duct 3 connects the first wind net device 40, the first suction winnower 11 and the upper outlet of the second suction winnower 13 both connect the second wind net device 41, the wind net devices 40, 41 includes a fan, a centrifugal dust collector and an wind closing unit. The first wind net device 40 is used for collecting the light impurities that aspirated from the corn cleaning stage; the second wind net device 41 is used for collecting the side products of corn bran layer, calyptra, fine endosperm and germ etc. that produced from the stirred debranning, germ screening and grits extracting stages.

When the product line is operational, the corn is put into the material pit 31, and then sent to the magnetic separator 1 (removing ferromagnetic impurities), the vibrating screen 2 (removing big impurities and light impurities), the vertical suction duct 3 (removing light impurities), the destoner 4 (removing heavy impurities like stones etc.) to remove impurities through the first hoister 32, whereafter the corn is sent to the raw corn warehouse 5 through the first helical conveyor 33, then to the moisture conditioner 6 to get wet through the second helical conveyor 34, the second hoister 35, and then to the corn dampening warehouse to be stored for about 15 hours, and then to the first stirrer 8 for the initial stirred debranning through the forth helical conveyor 37, the third hoister 38 (destroying or debranning part of the corn bran, helping the water to go inside the corn more easily in the next water adding stage), and then the corn is sprayed with water by using the spray dampener 9 (water amount about 3%, water temperature about 35 degree), the corn is sent to the second stirring debranner 10, the first suction winnower 11, the third stirring debranner 12 and the second suction winnower 13 to remove the corn bran layer by two continuous stirred debranning stages in consequence after dampening about 8 minutes, wherein over 70% of the corn bran layer can be debranned (the debranned bran layer and other impurities are removed by suction winnowers 11 and 13, the rest corn is then sent to the second wind net device 41 for the following separation). The corn whose 70% bran layer has been peeled off is grinded by the teeth-roller grinder 26 on the premise of assuring all the corn kernels are broken and substantially without hurting the germ, then use the cylinder grading screen 27 to screen out the fine material, and the fine material is sent to the plansifter 14 for further screening, the big kernels are sent to the forth stirring debranner 15 for stirred debranning again, wherein the material is also sent to the plansifter 14 for grade classifying. The plansifter 14 classifies the material into five different materials in terms of the size of the finished products: big grits material, medium grits material, small grits material, rough flour material and fine flour material (often used as fodder, marked as SL), wherein the big grits material is sent to the first gravity separator 16 for further screening and classifying to obtain highly pure big grits (DS), germ (PY) and mixed material; the medium grits material is sent to the second gravity separator 17 for further screening and classifying to obtain highly pure medium grits (ZS), germ (PY) and mixed material. The upper outlets of the first gravity separator 16 and the second gravity separator 17 both connect the second wind net device 41. The small grits material is sent to the first flour cleaner 18 for further screening and classifying to obtain highly pure small grits (XS), germ (PY) and mixed material. The rough flour material is sent to the second flour cleaner 19 for further screening and classifying to obtain highly pure rough flour (CF), germ (PY) and fine material which can be used as fodder (SL). The different sized mixed materials separated from the corn big grits material, medium grits material and small grits material can be again slightly grinded by the smooth-roller grinders 20, 21, 22 respectively, then screened for the second time by the flour cleaner after screened out the germ (PY) by the plansifters 23, 24, 25; wherein the forepart screening that is twice screened by the flour cleaner is the corn grits or corn flour, the upper riddling is germ, and the rest is the mixed material. In order to reduce the cost, the mixed material that screened from the flour cleaner in the second time is mostly used as fodder, and it's no need to do the further screening. Adjusting the gravity separators 16, 17 and flour cleaners 18, 19 can make the heavy material from which to achieve the quality standard of the corn grits, and make the purity of the germ from which to achieve or exceed 80% of the current level. The embodiment can be used for the product line which produces various products of big, medium, small corn grits and rough/fine corn flour etc.

By using the present inventive technique to process the corn, the output rate of the corn grits and corn flour is high, the economical benefit is remarkable. At last it is should be noticed that the foregoing descriptions of the embodiments of the invention are intended to illustrate and not to limit this invention, any equivalent replacements and modifications or partial replacements without departing from the spirit and the teachings of the disclosure are within the protection scope by the claims of the invention.

## Claims

1. A dry processing technique for corn, mainly comprising stages: cleaning, conditioning, debranning, degerming and grits breaking, and germ screening and grits extracting, wherein the debranning stage comprises first stirred debranning, dampening and second stirred debranning in sequence.

2. The dry processing technique for corn according to Claim 1, wherein the dampening stage using the dampener to add water of 0.5-5% of the corn weight to the corn, the water temperature being 10-60 °C, and the corn is sent to the stirred debranning stage for processing within 10 minutes after dampening, wherein height of the corn is controlled between 0.5m and 3m during the stirred debranning stage.

3. The dry processing technique for corn according to Claim 1 or 2, wherein a stirrer is used during stirred debranning, linear velocity of stirring rod of the stirrer is controlled between 1-6 m/S.

4. The dry processing technique for corn according to Claim 3, wherein the second stirred debranning is repeated one to four times, and the debranned bran is removed by winnowing or screening after each stirred debranning during the repeated stirred debranning.

5. The dry processing technique for corn according to Claim 3, wherein a stirrer is used to perform stirring debranning on the corn in the degerming and grits breaking stages.

6. A device actualizing the dry processing technique for corn according to Claim 1, comprising a magnetic separator, a vibrating screen, a vertical suction duct, a destoner, a raw corn warehouse, a moisture conditioner, a corn dampening warehouse, a first stirring debranner, a dampener, a second stirring debranner, a suction winnower, a teeth-roller grinder, a cylinder grading screen and a plansifter connected in sequence; wherein one outlet of the cylinder grading screen connects to the forth stirring debranner; the forth stirring debranner connects to the plansifter; the upper outlet of the vertical suction duct connects to the first wind net device, the upper outlet of the suction winnower connects to the second wind net device, the first and second wind net devices comprising a fan, a centrifugal dust collector and an wind closing unit.

7. The device for the dry processing technique for corn according to Claim 6, **characterized in that** the number of the second stirring debranner and the suction winnower can be added by one to four according to practical situation of the product line.
